(19) Europäisches Patentamt
European Patent Office
Office européen des brevets

(11) Publication number: **0 262 615 A2**

(12) # EUROPEAN PATENT APPLICATION

(21) Application number: 87114052.1

(22) Date of filing: 25.09.87

(51) Int. Cl.4: C08L 71/04, C08L 51/04, C08L 25/18

(30) Priority: 03.10.86 US 915139

(43) Date of publication of application: 06.04.88 Bulletin 88/14

(84) Designated Contracting States: DE FR GB IT NL

(71) Applicant: GENERAL ELECTRIC COMPANY
1 River Road
Schenectady New York 12305(US)

(72) Inventor: Haaf, William Robert
19 Scotch Pine Drive
Voorheesville New York 12186(US)

(74) Representative: Catherine, Alain et al
General Electric France Service de Propriété Industrielle 18 Rue Horace Vernet B.P. 76
F-92134 Issy-les-Moulineaux Cedex(FR)

(54) **Low molecular weight brominated polystyrene as a flame retardant for resin compositions containing polyphenylene ethers.**

(57) The impact strength and mold flow of flame resistant compositions of polyphenylene ether resins, high impact polystyrene, a brominated polystyrene and antimony oxide are substantially improved by using a low molecular weight brominated polystyrene.

EP 0 262 615 A2

Xerox Copy Centre

# LOW MOLECULAR WEIGHT BROMINATED POLYSTYRENE AS A FLAME RETARDANT FOR RESIN COMPOSITIONS CONTAINING POLYPHENYLENE ETHERS

## BACKGROUND OF THE INVENTION

### 1. FIELD OF THE INVENTION

The present invention relates to flame retardant polyphenylene ether compositions and, more specifically, to compositions of a polyphenylene ether resin and a high impact polystyrene in which a post-brominated polystyrene oligomer or polymer and antimony oxide are used in combination to impart better flame resistance, impact strength and mold flow.

### 2. DESCRIPTION OF THE PRIOR ART

Thermoplastic compositions of polyphenylene ether (oxide) resins and high impact polystyrenes are known to be useful for injection molding into a variety of articles characterized by highly desirable property profiles. With the wider use of these compositions in products where good flame resistance is an important requirement, the need has grown for additives that upgrade the flame retardance of the composition without significantly detracting from other desired properties. Most flame retardant additives for polyphenylene ether compositions have been non-polymeric compounds that are relatively low in molecular weight. Many of these tend to juice or bloom, that is, in essence to volatilize or migrate to the surface of the composition during the molding process.

Recent efforts have involved the investigation of higher molecular weight materials, and especially styrene oligomers and polymers having bromine substituents bound in the chain. For instance, U.S. Patent 4,279,808 (Hornbaker, et al.) describes moldable thermoplastic resins formed by the polymerization of nuclear brominated styrenes in the presence of rubber. The resulting resin is useful as such but can also be blended with other resins, including polyphenylene ethers, to impart increased increased flame resistance to the blend.

A number of other patents describe compositions of polyphenylene ethers and polystyrenes in which the polystyrene can theoretically contain flame retardant halogen atoms such as bromine or chlorine. These include U.S. Patent 3,933,941 (Yonemitsu, et al.), U.S. Patent 4,355,126 (Haaf, et al.) and U.S. Patent 4,448,931 (Sugio, et al.). Sugio combines polyphenylene ethers with a brominated polystyrene having from 1 to 5 bromines per aromatic nucleus and a molecular weight of greater than 30,000, preferably 50,000 to 200,000.

Also of interest are recent developments in which various copolymers of styrene and bromostyrene are included in polyphenylene ether resin blends to improve the flame resistance. These are the subject of pending U.S. continuation applications Serial No. 762,805 and Serial; No. 762,806, of August 2, 1985(both in the names of Glenn D. Cooper and Arthur Katchman), as well as pending U.S. applications Serial No. 675,344 of November 27, 1984 (Abolins, Aycock and Kinson) and Serial No. 675,715 of November 28, 1984(Axelrod and Cooper). Laid open United Kingdom applications 2076830A and 2076831A are essentially foreign counterparts of the first two above mentioned U.S. applications.

Several patents describe the preparation of brominated polystyrene oligomers having fire retardant utility. Such materials are prepared by the action of elemental bromine on the hydrogenated polystyrene oligomer as disclosed in U.S. Patents 4,074,033 and 4,143,221 (Naarmann, et al.). The usefulness of brominated styrene oligomers for certain polymers is described in Wurmb, et al., U.S. Patent 4,107,231 (for linear polyesters), in Theysohn, et al., U.S. Patent 4,137,212 (for nylon compositions), and in Neuberg, et al., U.S. Patent 4,151,223 (for fibrous or filamentous linear thermoplastic polyesters).

Japanese Patent Publication No. 60-90256, May 21, 1985, describes a flame retardant polyphenylene ether composition said to exhibit excellent flame retardance and heat resistance, with very little migration of halogenated materials. The composition comprises, in addition to the polyphenylene ether resin, a brominated styrene polymer and optionally other styrene polymers such as rubber modified polystyrene and SBR triblock copolymers and, optionally, a synergist for the brominated polystyrene namely, antimony oxide. A particular brominated styrene polymer shown is PYRO-CHEK 68PB, which is described as a

brominated polystyrene containing 68 per cent bromine and having a number average molecular weight of 150,000. Although it is stated that the brominated polystyrene should contain at least 50 repeating units, and a bromine content of more than 40%, which corresponds to a molecular weight of about 9100 for a monobromo compound, the only Examples employ PYRO-CHEK 68 PB.

Copending, commonly assigned Abolins, U.S. Patent Application Serial No. 841,442, discloses and claims flame retardant polyphenylene ether compositions in which a brominated styrene polymer is used in synergistic combination with antimony oxide. The brominated polymeric flame retardant is of moderate to high molecular weight, specifically from 20,000 to 50,000, especially 150,000, and a preference is stated for polymer like the above-mentioned PYRO-CHEK 68PB.

In neither the Japanese Patent Publication nor the Abolins application is it disclosed what effect the brominated polystyrenes would have on the impact strength or the melt-processability of the compositions if the molecular weight of the brominated polystyrene is lowered below 150,000.

In the present state of the art, therefore, it is known that the usage of a polymeric (larger molecule) flame retardant (FR) provides much greater resistance to migration or "plate out" in resin compositions as composed to a monomeric or oligomeric (small molecule) FR. However, unfortunately, many experiments have shown that --as will be confirmed by the comparative Examples hereinafter--the use of larger molecule bromine-containing polymeric FR's in resin compositions based on polyphenylene ether adversely affects Izod impact resistance and ease of melt flow.

Unexpectedly, it has now been found that using low molecular weight brominated polystyrene flame retardants of similar bromine content markedly improves both Izod impact strength and melt flow while at the same time maintaining desirable levels of other properties. The examples which follow demonstrate that using a variety of compositions flame retarded with post-brominated (1.6-2.9 bromine atoms per ring) polystyrene and having low molecular weights, e.g., 7,500-54,000, provide these advantageous properties, in back-to-back comparison with compositions disclosed in the Japanese Patent Publication and in the Abolins application.

## SUMMARY OF THE INVENTION

According to the present invention, useful, flame retardant compositions of a polyphenylene ether resin and a high impact polystyrene are prepared by incorporating a brominated styrene oligomer or polymer in conjunction with antimony oxide. The resulting compositions provide, in addition to good flame retardant properties, excellent resistance to migration and blooming, high impact strength, and improved melt flow.

The compositions are extrudable and moldable into a broad spectrum of shaped plastic products.

## DESCRIPTION OF THE INVENTION

Briefly described, in the method of the present invention thermoplastic compositions comprising:

(a) a polyphenyene ether resin;

(b) a rubber modified, high impact polystyrene resin;

(c) a brominated polystyrene in an amount which improves the flame retardancy of the combination of (a) and (b); and

(d) antimony oxide in an amount which synergistically enhances the flame retardancy of the combination of (a), (b) and (c), are provided with enhanced impact strength and mold flow by the improvement which comprises using as (c) a low molecular weight brominated polystyrene having a weight average molecular weight of lower than about 54,000. Preferably, the weight average molecular weight of (c) as determined by gel permeation chromatography is from about 7,500 to about 18,000, and especially preferably from about 10,000 to about 17,000, and the average bromine substitution per aromatic nucleus is from about 1 to 3.

The polyphenylene ethers (also known as polyphenylene oxides) used in the present invention are a well known class of polymers which have become very useful commercially as a result of the discovery by Allan S. Hay of an efficient and economical method of production (See, for example, U.S. Patents 3,306,874 and 3,306,875, which are incorporated herein by reference). Numerous modifications and variations have since been developed but, in general, they are characterized as a class by the presence of arylenoxy structural units. The present invention includes all such variations and modifications, including but not limited to those described hereinafter.

The polyphenylene ethers favored for use in the practice of this invention generally contain structural units of the following formula

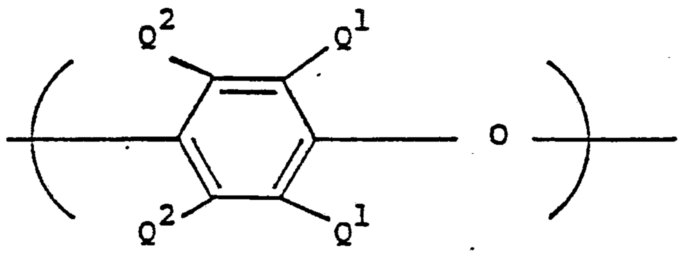

(I)

in which in each of these units independently each $Q^1$ is hydrogen, halogen, primary or secondary lower alkyl (i.e., alkyl containing up to 7 carbon atoms), phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-,3-or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$alkyl, and each $Q^2$ is hydrogen.

Both homopolymers and copolymers are included. Suitable homopolymers are those containing, for example, 2,6-dimethyl-1,4-phenylene ether units. Suitable copolymers include random copolymers containing such units in combination with, for example, 2,3,6-trimethyl-1,4-phenylene ether units. Many suitable random copolymers, as well as homopolymers, are disclosed in the patent literature, including various Hay patents. Also contemplated are graft copolymers, including those prepared by grafting onto the polyphenylene ether chain such vinyl monomers as acrylonitrile and vinyl aromatic compounds (for example, styrene), and such polymers as polystyrenes and elastomers. Still other suitable polyphenylene ethers are the coupled polyphenylene ethers in which the coupling agent is reacted with the hydroxy groups of the two polyphenylene ether chains to increase the molecular weight of the polymer. Illustrative of the coupling agents are low molecular weight polycarbonates, quinones, heterocycles and formals.

The polyphenylene ether generally has a molecular weight (number average, as determined by gel permeation chromatography, whenever used herein) within the range of about 5,000 to 40,000. The intrinsic viscosity of the polymer is usually in the range of about 0.35 to 0.55 deciliters per gram (dl./g.), as measured in solution in chloroform at 25°C.

The polyphenylene ethers may be prepared by known methods, and typically by the oxidative coupling of at least one corresponding monohydroxyaromatic (e.g., phenolic) compound. A particularly useful and readily available monohydroxyaromatic compound is 2,6-xylenol (in which for the above formula each $Q^1$ is methyl and each $Q^2$ is hydrogen), the corresponding polymer of which may be characterized as a poly(2,6-dimethyl-1,4-phenylene ether).

Any of the various catalyst systems known in the art to be useful for the preparation of polyphenylene ethers can be used in preparing those employed in this invention. For the most part, they contain at least one heavy metal compound, such as a copper, manganese or cobalt compound, usually in combination with various other materials.

Among the preferred catalyst systems are those containing copper. Such catalysts are disclosed, for example, in the aforementioned U.S. Patents 3,306,874 and 3,306,875, and elsewhere. They are usually combinations of cuprous or cupric ions, halide ions (i.e., chloride, bromide or iodide), and at least one amine.

Also preferred are catalyst systems containing manganese. They are generally alkaline systems containing divalent manganese and such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, -hydroxyoximes (both monomeric and polymeric), o-hydroxyaryl oximes, and -diketones. Also useful are cobalt-containing catalyst systems. Those skilled in the art will be familiar with patents disclosing manganese and cobalt-containing catalyst systems for polyphenylene ether preparation.

Especially useful polyphenylene ethers for the purposes of this invention are those which comprise molecules having at least one of the end groups of formulas II and III, below, in which $Q^1$ and $Q^2$ are as previously defined, each $R^1$ is independently hydrogen or alkyl, providing that the total number of carbon atoms in both $R^1$ radicals is 6 or less, and each $R^2$ is independently hydrogen or a $C_{1-6}$primary alkyl radical. Preferably, each $R^1$ is hydrogen and each $R^2$ is alkyl, especially methyl or n-butyl.

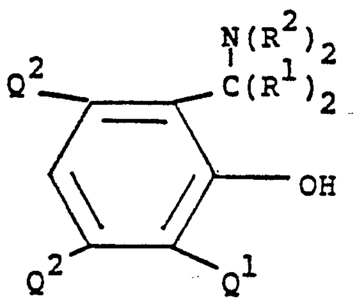

(II)

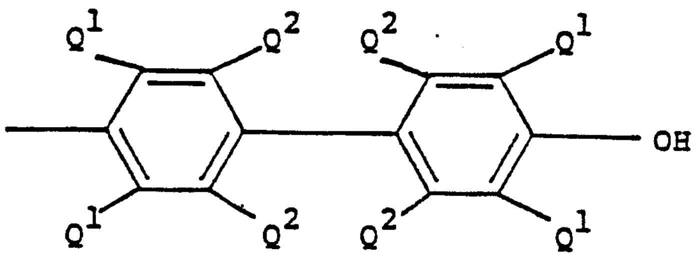

(III)

Polymers containing the aminoalkyl-substituted end groups of formula II may be obtained by incorporating an appropriate primary or secondary monoamine as one of the constituents of the oxidative coupling reaction mixture, especially when a copper or manganese-containing catalyst is used. Such amines, especially the dialkylamines and preferably di-n-butylamine and dimethylamine, frequently become chemically bound to the polyphenylene ether, most often by replacing one of the -hydrogen atoms on one or more $Q^1$ radicals adjacent to the hydroxy group on the terminal unit of the polymer chain. During further processing and/or blending, the aminoalkyl-substituted end groups may undergo various reactions, probably involving a quinone methide-type intermediate of formula IV, below ($R^1$ is defined as above), with beneficial effects often including an increase in impact strength and compatibilization with other blend components.

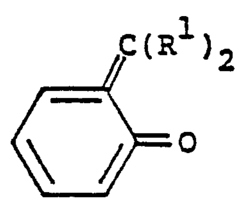

(IV)

Polymers with biphenol end groups of formula III are typically obtained from reaction mixtures in which a by-product diphenoquinone of formula V, below, is present, especially in a copper-halide-secondary or tertiary amine system. In this regard, the disclosures of the U.S. Patents 4,234,706, 4,477,649 and 4,482,697 are particularly pertinent, and are incorporated herein by reference. In mixtures of this type, the diphenoquinone is ultimately incorporated into the polymer in substantial amounts, chiefly as an end group.

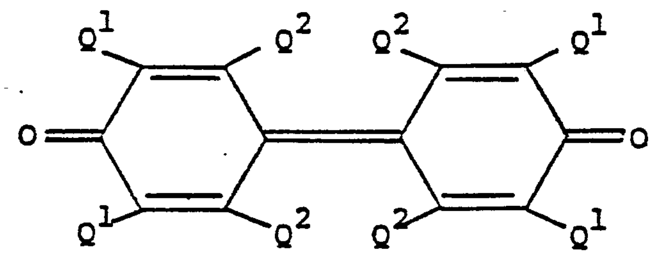

(V)

In many polyphenylene ethers obtained under the conditions described above, a substantial proportion of the polymer molecules, usually as much as about 90% by weight of the polymer, contain end groups having one or frequently both of formulas II and III. It should be understood, however, that other end groups may be present and that the invention in its broadest sense may not be dependent on the molecular structures of the polyphenylene ether end groups.

It will thus be apparent to those skilled in the art that a wide range of polymeric materials encompassing the full recognized class of polyphenylene ether resins are contemplated as suitable for use in the practice of the present invention.

The rubber modified, high impact polystyrene useful as component (b) in the present invention can be selected from any of the materials known generally in the art as high impact polystyrenes, or HIPS. In general, these modified polystyrene resins are made by adding rubber during or after polymerization of the styrene, to yield an interpolymer of rubber and polystyrene, a physical admixture of rubber and polystyrene, or both, depending on the particular process employed.

Suitable rubber modifiers include polybutadiene, polyisoprene, polychloroprene, ethylene-propylene copolymers (EPR), ethylene-propylene-diene (EPDM) rubbers, styrene-butadiene copolymers (SBR), and polyacrylates. The amount of rubber employed will vary, depending on such factors as the process of manufacture and individual requirements.

Included within this family of materials for purposes of the present invention are more recently developed forms in which such factors as the rubber particle size, the gel and cis contents of the rubber phase, and the rubber volume percent are regulated or controlled to achieve improvements in the impact resistance and other properties. These kinds of HIPS are described in the patent literature, including U.S. Patent 4,128,602 (Katchman and Lee, Jr.), and U.S. Patent 4,528,327 (Cooper and Katchman), which are incorporated herein by reference.

Also contemplated as suitable for use are high impact polystyrenes having morphological forms which are sometimes referred to as core-shell, comprising particles of rubber-encapsulated polystyrene dispersed in a matrix of polystyrene resin. Examples of this type are disclosed in U.S. Patent 4,513,120 (Bennett, Jr. and Lee, Jr.), incorporated herein by reference, as well as the above-mentioned U.S. 4,528,327.

The brominated polystyrenes can be prepared by following the procedures described in published European Patent Application 0047549 of Henry J. Barda or of U.S. Patent No. 4,352,909 and The Journal of Organic Chemistry, Vol. 12, p. 108(1947). In general, the method of preparation comprises dissolving a polystyrene having a molecular weight of below about 18,000 in a solvent, and reacting the dissolved polystyrene with a stoichiometric excess of bromine chloride (that is, an amount greater than that required for achieving the desired, theoretical degree of bromination), in the presence of up to about 15% by weight of a Lewis acid catalyst, based on the weight of the polystyrene, at temperatures of about 20°C. to about 50°C.

The bromination reaction can be represented by the following equation:

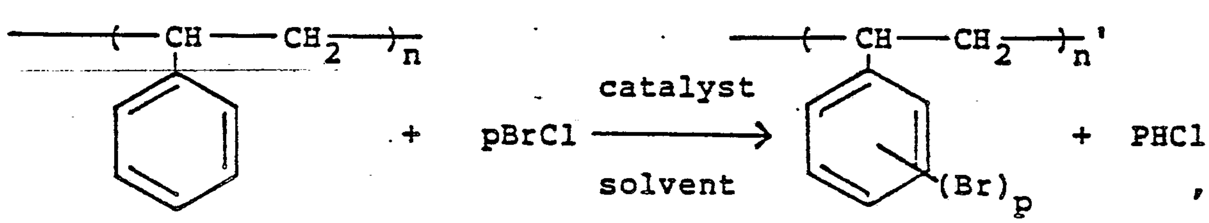


,

where n and n′ represent the number of styrene monomer units in the respective polystyrene chains; and p represents the number, as an average, of bromine atoms added to (and displacing a corresponding number of hydrogen atoms from) the aromatic nucleus of each styrene monomer unit and is preferably from 1 to 3. As shown, hydrogen chloride is produced as a byproduct of the reaction.

The molecular weight of the polystyrene reactant, as mentioned above, is below about 54,000, is preferably in the range of about 7500 to about 18,000 and is especially preferably in the range of from about 10,000 to about 17,000. The molecular weight is determined, for example, by gel permeation chromatography, as a weight average molecular weight. It can also be determined by light scattering, as an alternative approach or by other known methods.

The polystyrene reactant may be a halo-or lower alkyl-substituted polymer, or a copolymer such as of styrene and alpha-methyl styrene. It is in any event not rubber modified, and is thus distinguishable on that basis alone from component (b).

The catalyst is preferably a metal halide Lewis acid catalyst that is capable of effecting a Friedel-Crafts reaction. These include the bromides and chlorides of aluminum, antimony, and mixtures thereof. Specific examples are $SbCl_3$, $SbCl_5$, $SbBr_3$, $SbClBr_4$, $SbBrCl_4$, $FeCl_3$, $FeBr_3$, $AlCl_3$, $TiCl_4$, $TiBr_4$, $SnCl_2$, $SnCl_4$, $AlBr_3$, $BeCl_2$, $CdCl_2$, $ZnCl_2$, $BF_3$, $BCl_3$, $BBr_3$, $BiCl_3$ and $ZrCl_4$, as well as mixtures thereof. Especially preferred is antimony trichloride($SbCl_3$).

The amount of catalyst employed should be at least 2% by weight, based on the weight of the polystyrene reactant. Catalyst levels in the range from about 5% to about 8% are preferred.

In general, the reaction is feasible using small amount of catalyst and large amounts of bromine chloride in excess of the theoretical amount or, conversely, large amounts of catalyst and small amounts of bromine chloride over the theoretical amount.

The organic solvent selected as the reaction medium should ideally dissolve the reactants, be substantially anhydrous, and be inert or exhibit relatively low reactivity toward the reactants. Organic solvents free of carbon-to-carbon unsaturation have been found to be suitable. Especially useful are halogenated, particularly chlorinated, saturated aliphatic hydrocarbons. Examples include carbon tetrachloride, chloroform, tetrachloroethane, methylene chloride, trichloroethane, dibromoethane, and the like. The most preferred is ethylene dichloride.

Any unreacted bromine chloride may be removed by distillation, or by chemical elimination as by adding an aqueous solution of bisulfite or caustic.

The brominated polystyrene product can be recovered by adding the still warm reaction mixture to hot methanol, upon which the product precipitates in finely particulate form, with good color. Alternatively, and less preferably, evaporation of the solvent will result in isolation of the brominated polystyrene.

Typically, using the aforementioned procedure a degree of bromine substitution of from one to three bromine atoms per aromatic nucleus on the average is achieved, depending on the particular conditions and especially the amount of bromine chloride used in relation to the amount of polystyrene reactant. A degree of bromination from about 1.6 to about 2.9 bromine atoms per aromatic nucleus is preferred and the product having about 2.5 bromine per aromatic nucleus is most desired. A very small percentage of chlorine is believed to be nuclear bound also, but it is not considered significant for the purposes of this description.

Suitable low molecular weight brominated poly styrene materials for use in the present invention also are available commercially, e.g., from Great Lakes Chemical Co., and from Ferro Chemical Company.

In formulating the compositions in accordance with the method of this invention, amounts for the above mentioned ingredients are selected which preferably fall within certain preferred ranges, as follows:

| Ingredients | Amount, Parts by Weight |
|---|---|
| (a) Polyphenylene ether | 10 to 90 |
| (b) High impact polystyrene | 90 to 10 |
| TOTAL: | 100 parts by weight |
| (c) Brominated polystyrene | 6 to 21 |
| (d) Antimony oxide | 1.6 to 7.5 |
| | per 100 parts by (a) and (b). |

Preferred amounts of polyphenylene ether (a) will be from about 25 to about 75 parts by weight per 100 parts by weight of (a) and (b) and preferred amounts of high impact polystyrene (b) will be from about 25 to about 75 parts by weight per 100 parts by weight of (a) and (b).

The present kinds of compositions can also be formulated to include other ingredients in addition to those just described. These may be selected from among conventional materials commonly employed in polyphenylene ether resin blends, some of which are non-polymeric, others of which can be polymeric. Examples are plasticizers, impact modifiers, mold release agents, melt viscosity reducers, colorants, stabilizers, antioxidants, mineral fillers (for example, clay), glass reinforcements, titanium oxides, lubricants, and so forth. Conventional Conventional amounts varying, for example, from less than 1 to greater than 50 percent by weight, per 100 percent by weight of the total composition, may be utilized.

The compositions can be prepared by any convenient method and, preferably, by forming a preblend of the ingredients, compounding the preblend by passing it through an extruder, and cooling the extrudate and cutting it into pellets or tablets. The tabletted composition can later be formed into the desired article, as by molding at elevated temperatures.

Because of their thermoplastic nature, the present compositions are particularly suitable for injection molding processes. Using standard procedures and conditions, these blends can be molded to various shapes and sizes, and the resulting products, besides having good flame retardancy, are characterized by excellent resistance to migration and blooming, good heat resistance and good impact strength.

## DESCRIPTION OF THE SPECIFIC EMBODIMENTS

The invention is further illustrated in the description below, which is set forth to show a preferred or best embodiment.

## EXAMPLES I and I(A)

The compositions shown in Table 1 were prepared by forming a dry blend of the ingredients, compounding the blend by passage through a 28mm Werner Pfleiderer twin-screw twin-screw extruder at about 575°F melt temperature, and cooling and chopping the extrudate into pellets. The pellets were molded into 0.125 inch-thick miniature test pieces, using a 4 ounce Newbury injection molding machine, and about 520°F melt temperature, and an about 150°F mold temperature. In addition, using the same conditions, molded test pieces having the dimensions 0.06 inch by 0.5 inch by 5 inches were prepared for the UL Subject 94 flame resistance test.

For comparison purposes, a composition such as that described by Example 1 of Japanese Patent Publication was prepared and subjected to a back-to-back comparison to a similar composition prepared according to the method of the present invention. In addition to flammability test, Izod impact strength and channel flow length, not described by the Japanese Publication, were measured on both compositions.

TABLE 1. Composition

| Ingredients | Amount, Parts by Weight* I | I(A) (comparison) |
|---|---|---|
| Poly(2,6-dimethyl-1,4-phenylene ether)resin (PPO®, General Electric Co., i.v. 0.40 dl./g., chloroform, 25°C.) | 45 | 45 |
| Rubber modified, high impact polystyrene (AH 1897, American Hoechst Co.) | 52.5 | 52.5 |
| Brominated polystyrene | 13.9 | 13.5 |
| Antimony oxide | 4.5 | 4.5 |

*All compositions also contained 7.5 pbw KD1101 (a mixture of SB diblock and SBS triblock copolymers); 7.5 pbw A433 (an aromatic polyester); 4 pbw TDP (4,4' Thiodiphenol); 1 pbw HS-1 (sodium lauryl sulfonate); and 0.15 pbw of each of ZnO and ZnS.

The brominated polystyrenes employed had the following characteristics:

| | I (This Invention) | I(A) (Prior art) |
|---|---|---|
| Bromine Content | 65.4 | 67 |
| Weight Average Molecular Weight, Mw (x $10^3$) | 10.8 | 216 |
| Total % Br in Blend | 6.67 | 6.66 |

The various test pieces were exposed to common physical property tests in accordance with ASTM procedures and UL Subject 94 flame resistance procedures. The results are reported in Table 2.

TABLE 2. Properties

| | I | I(A) |
|---|---|---|
| Tensile Yield Strength (psi) | 6200 | 6400 |
| Tensile Elongation | 55% | 49% |
| Notched Izod Impact Resistance (ft.lb./in.-n.) | 6.4 | 4.8 |
| Deflection Temperature under load at 264 psi (Test piece: ¼"x½"x5")(°F) | 201 | 200 |
| Channel Flow Length, upon injection at about 520°F. under 10,000 psi(in.) | 23.7 | 21.7 |
| UL Subject 94 Test | | |
| 1/16-inch thick samples | V-O (1.5) | V-O (1.8) |

EXAMPLES II and II(A)

The compositions shown in Table 3 were prepared by forming a dry blend of the ingredients, compounding the blend by passage through a 28mm Werner Pfleiderer twin-screw extruder at about 575°F melt temperature, and cooling and chopping the extrudate into pellets. The pellets were molded into 0.125 inch-thick miniature test pieces, using a 4 ounce Newbury injection molding machine, an about 520°F melt temperature, and an about 150°F mold temperature. In addition, using the same conditions, molded test pieces having the dimensions 0.06 inch by 0.5 inch by 5 inches were prepared for the UL Subject 94 flame resistance test. Again, the compositions were similar to Japanese Publication Example 1, however, this time a different low molecular weight brominated polystyrene of the present invention was utilized.

TABLE 3. Composition

| Ingredients | Amount, Parts by Weight* II | II(A) (comparison) |
|---|---|---|
| Poly(2,6-dimethyl-1,4-phenylene ether) resin (PPO®, General Electric Co., i.v. 0.40 dl./g., chloroform, 25°C.) | 45 | 45 |
| Rubber modified, high impact polystyrene (AH 1897, American Hoechst Co.) | 52.5 | 52.5 |
| Brominated polystyrene | 14.0 | 13.5 |
| Antimony oxide | 4.5 | 4.5 |

*All compositions also contained 7.5 pbw KD1101 (a mixture of SB diblock and SBS triblock copolymers); 7.5 pbw A433 (an aromatic polyester); 4 pbw TDP (4,4' Thiodiphenol); 1 pbw HS-1 (sodium lauryl sulfonate); and 0.15 pbw of each of ZnO and ZnS.

The brominated polystyrenes employed had the following characteristics:

| | II (This Invention) | II(A) (Prior Art) |
|---|---|---|
| | (Great Lakes Chem) | (Ferro Chemical) |
| Bromine Content | 64.6% | 67% |
| Weight Average Molecular Weight, Mw (x $10^3$) | 13.6 | 216 |
| Total % Br in Blend | 6.64 | 6.67 |

The various test pieces were exposed to common common physical property tests in accordance with ASTM procedures and UL Subject 94 flame resistance procedures. The results are reported in Table 4.

TABLE 4. Properties

| | II | II(A) |
|---|---|---|
| Tensile Yield Strength (psi) | 6200 | 6400 |
| Tensile Elongation | 55% | 49% |
| Notched Izod Impact Resistance (ft.lb./in.-n.) | 6.5 | 4.8 |
| Deflection Temperature, under load at 264 psi (Test piece: ¼"x½"x5")(°F) | 201 | 200 |
| Channel Flow Length, upon injection at about 520°F under 10,000 psi(in.) | 23.6 | 21.7 |
| UL Subject 94 Test 1/16-inch thick samples | V-O (1.1) | V-O (1.8) |

As can be seen from the foregoing comparative examples, the compositions of the presently claimed invention, which differ from those of the Japanese Publication, unexpectedly exhibit increased Izod impact strength and flow properties, both of which are important.

Examples III and IV, and comparative Examples III(A) and IV(A), show further embodiments of the presently claimed invention as compared to those of the prior art.

## EXAMPLES III and III(A)

The compositions shown in Table 5 were prepared by forming a dry blend of the ingredients, compounding the blend by passage through a 28mm Werner Pfleiderer twin-screw extruder at about 580°F melt temperature, and cooling and chopping the extrudate into pellets. The pellets were molded into 0.125 inch-thick miniature test pieces, using a 4 ounce Newbury injection molding machine, and an about 510°F melt temperature, and an about 150°F mold temperature. In addition, using the same conditions, molded test pieces having the dimensions 0.06 inch by 0.5 inch by 5 inches were prepared for the UL Subject 94 flame resistance test.

TABLE 5. Composition

| Ingredients | Amount, Parts by Weight* III | III(A) (comparison) |
|---|---|---|
| Poly(2,6-dimethyl-1,4-phenylene ether) resin (PPO®, General Electric Co., i.v. 0.40 dl./g. chloroform, 25°C.) | 45 | 45 |
| Rubber modified, high impact polystyrene (AH 1897, American Hoechst Co.) | 52.5 | 52.5 |
| Brominated polystyrene | 13.7 | 13.7 |
| Antimony oxide | 4.5 | 4.5 |

*All compositions also contained 7.5 pbw KD1101 (a mixture of SB diblock and SBS triblock copolymers); 7.5 pbw A433 (an aromatic polyester); 2 pbw U236 (4,4'-Thiobis(2-t-butyl-5-methylphenol)); 1 pbw HS-1 (sodium lauryl sulfonate); and 0.15 pbw of each of ZnO and ZnS.

The brominated polystyrenes employed had the following characteristics:

| | III (This Invention) | III(A) (Prior Art) |
|---|---|---|
| Bromine Content | 66.2% | 66.2% |
| Weight Average Molecular Weight, Mw ($x 10^3$) | 17 | 354 |
| Total % Br in Blend | 6.77 | 6.77 |

The various test pieces were exposed to common common physical property tests in accordance with ASTM procedures and UL Subject 94 flame resistance procedures. The results are reported in Table 6.

TABLE 6. Properties

| | III | III(A) |
|---|---|---|
| Tensile Yield Strength (psi) | 6200 | 6100 |
| Tensile Elongation | 60% | 39% |
| Notched Izod Impact Resistance (ft.lb./in.-n.) | 5.6 | 3.0 |
| Deflection Temperature, under load at 264 psi (Test piece: ¼"x½"x5")(°F) | 196 | 195 |
| Channel Flow Length, upon injection at about 510°F. under 10,000 psi(in.) | 19.8 | 19.0 |
| UL Subject 94 Test 1/16-inch thick samples | V-I (2.8)** | V-O (1.9) |

** One of the ten(10) self-extinguishing times was an atypical 11 seconds--one(1) second in excess of the 10 sec. permitted for VO.

EXAMPLES IV and IV(A)

The compositions shown in Table 7 were prepared by forming a dry blend of the ingredients, compounding the blend by passage through a 28mm Werner Pfleiderer twin-screw extruder at about 645°F melt temperature, and cooling and chopping the extrudate into pellets. The pellets were molded into 0.125 inch-thick miniature test pieces, using a 4 ounce Newbury injection molding machine, and about 570°F melt temperature, and about 190°F mold temperature. In addition, using the same conditions, molded test pieces having the dimensions 0.06 inch by 0.5 inch by 5 inches were prepared for the UL Subject 94 flame resistance test.

TABLE 7. Composition

| Ingredients | Amount, Parts by Weight* IV | IV(A) (comparison) |
|---|---|---|
| Poly(2,6-dimethyl-1,4-phenylene ether) resin (PPO®, General Electric Co., i.v. 0.40 dl./g., chloroform, 25°C.) | 65 | 65 |
| Rubber modified, high impact polystyrene (AH 1897, American Hoechst, Co.) | 30 | 30 |
| Brominated polystyrene | 6.8 | 6.8 |
| Antimony oxide | 2.3 | 2.3 |

*All compositions also contained 5 pbw KG1651 (an S-EB-S triblock copolymer); 1 pbw U236 (4,4'-Thiobis(2-t-butyl-5 methylphenol); 1.5 pbw PE (a linear low density polyethylene); and 0.15 pbw each of ZnO and ZnS.

The brominated polystyrenes employed had the following characteristics:

| | IV (This Invention) | IV(A) (Prior Art) |
|---|---|---|
| Bromine Content | 66.2 | 66.2 |
| Weight Average Molecular Weight, Mw (x $10^3$) | 17 | 354 |
| Total % Br in Blend | 4.02 | 4.02 |

The various test pieces were exposed to common physical property tests in accordance with ASTM procedures and UL Subject 94 flame resistance procedures. The results are reported in Table 8.

TABLE 8. Properties

| | IV | IV(A) |
|---|---|---|
| Tensile Yield Strength (psi) | 9100 | 9200 |
| Tensile Elongation | 17% | 16% |
| Notched Izod Impact Resistance (ft.lb./in.-n.) | 3.7 | 3.6 |
| Deflection Temperature, under load at 264 psi (Test piece: ¼"x½"x5") | 269 | 270 |
| Channel Flow Length, upon injection at about 570°F. under 10,000 psi | 16.5 | 16.0 |
| UL Subject 94 Test 1/16-inch thick samples | V-O (3.0) | V-I (3.8) |

EXAMPLES V and V(A).

The compositions shown in Table 9 were prepared by forming a dry blend of the ingredients, compounding the blend by passage through a 28mm Werner Pfleiderer twin-screw extruder at about 600°F melt temperature, and cooling and chopping the extrudate into pellets. The pellets were molded into 0.125 inch-thick miniature test pieces, using a 4 ounce Newbury injection molding machine, and about 525°F melt temperature, and an about 150°F mold temperature. In addition, using the same conditions, molded test pieces having the dimensions 0.06 inch by 0.5 inch by 5 inches were prepared for the UL Subject 94 flame resistance test.

For comparison purposes, a composition such as that described in Example 3 of Japanese Patent Publication was prepared and subjected to a back-to-back comparison to a similar composition prepared according to the method of the present invention. Again, the Izod strength and channel flow length shown by the compositions of the present method are markedly improved.

TABLE 9 Composition

| Ingredients | Amount, Parts by Weight* V | V(A) (comparison) |
|---|---|---|
| Poly(2,6-dimethyl-1,4-phenylene ether) resin (PPO®, General Electric Co., i.v. 0.40 dl./g., chloroform, 25°C.) | 25 | 25 |
| Rubber modified, high impact polystyrene (MHG, core-shell, small rubber particle size HIPS, Mobil) | 70 | 70 |
| Brominated polystyrene | 17.6 | 17.4 |
| Antimony oxide | 5.8 | 5.8 |

*All compositions also contained 10 pbw KD1101 (a mixture of S-B-S triblock and S-B diblock copolymers); 1 pbw A433 (an aromatic polyester); and 0.15 pbw of each of ZnO and ZnS.

The brominated polystyrenes employed had the following characteristics:

| | V (This Invention) | V(A) (Prior Art) |
|---|---|---|
| Bromine Content | 66.2% | 67.0% |
| Weight Average Molecular Weight, Mw (x $10^3$) | 17 | 216 |
| Total % Br in Blend | 8.98 | 9.00 |

The various test pieces were exposed to common physical property tests in accordance with ASTM procedures and UL Subject 94 flame resistance procedures. The results are reported in Table 10.

TABLE 10. Properties

| | V | V(A) |
|---|---|---|
| Tensile Yield Strength (psi) | 5400 | 5500 |
| Tensile Elongation | 73% | 35% |
| Notched Izod Impact Resistance (ft.lb./in.-n.) | 5.8 | 3.2 |
| Deflection Temperature, under load at 264 psi (Test piece: ¼"x½"x5")(°F) | 211 | 212 |
| Channel Flow Length, upon injection at about 525°F. under 10,000 psi(in.) | 18.5 | 16.3 |
| UL Subject 94 Test 1/16-inch thick samples | V-O (2.0) | V-O (1.3) |

Examples VI, VII and VIII which follow, and comparative Examples VI(A), VII(A) and VIII(A), show further embodiments of the presently claimed invention as compared to the prior art.

EXAMPLES VI and VI(A)

The compositions shown in Table 11 were prepared by forming a dry blend of the ingredients, compounding the blend by passage through a 28mm Werner Pfleiderer twin-screw extruder at about 585°F melt temperature, and cooling and chopping the extrudate into pellets. The pellets were molded into 0.125 inch-thick miniature test pieces, using a 4 ounce Newbury injection molding machine, and about 520°F melt temperature, and an about 150°F mold temperature. In addition, using the same conditions, molded test pieces having the dimensions 0.06 inch by 0.5 inch by 5 inches were prepared for the UL Subject 94 flame resistance test.

TABLE 11. Composition

| Ingredients | Amount, Parts by Weight* VI | VI(A) (comparison) |
|---|---|---|
| Poly(2,6-dimethyl-1,4-phenylene ether) resin (PPO®, General Electric Co., i.v. 0.40 dl./g., chloroform, 25°C.) | 50 | 50 |
| Rubber modified, high impact polystyrene (AH 1897, American Hoechst Co.) | 45 | 45 |
| Brominated polystyrene | 13.7 | 13.5 |
| Antimony oxide | 4.5 | 4.5 |

*All compositions also contained 10 pbw KD1101 (a mixture of S-B-S triblock and S-B diblock copolymer); 6 pbw Bis phenol A; 1 pbw HS-1 (sodium lauryl sulfonate) 8 pbw A433 (an aromatic polyester); and 0.15 pbw of each of ZnO and ZnS.

The brominated polystyrenes employed had the following characteristics:

| | VI (This Invention) | VI(A) (Prior Art) |
|---|---|---|
| Bromine Content | 66.2% | 67.0% |
| Weight Average Molecular Weight, Mw ($\times 10^3$) | 17 | 216 |
| Total % Br in Blend | 6.55 | 6.54 |

The various test pieces were exposed to common physical property tests in accordance with ASTM procedures and UL Subject 94 flame resistance procedures. The results are reported in Table 12.

TABLE 12. Properties

| | VI | VI(A) |
|---|---|---|
| Tensile Yield Strength (psi) | 6070 | 6460 |
| Tensile Elongation | 57% | 40% |
| Notched Izod Impact Resistance (ft.lb./in.-n.) | 6.9 | 5.5 |
| Deflection Temperature, under load at 264 psi (Test piece: ¼"x½"x5")(°F) | 186 | 191 |
| Channel Flow Length, upon injection at about 520°F. under 10,000 psi(in.) | 22.2 | 19.9 |
| UL Subject 94 Test 1/16-inch thick samples | V-O (1.7) | V-O (2.8) |

EXAMPLES VII and VII(A)

The compositions shown in Table 13 were prepared by forming a dry blend of the ingredients, compounding the blend by passage through a 28mm Werner Pfleiderer twin-screw extruder at about 600°F melt temperature, and cooling and chopping the extrudate into pellets. The pellets were molded into 0.125 inch-thick miniature test pieces, using a 4 ounce Newbury injection molding machine, and about 525°F melt temperature, and about 150°F mold temperature. In addition, using the same conditions, molded test pieces having the dimensions 0.06 inch by 0.5 inch by 5 inches were prepared for the UL Subject 94 flame resistance test.

TABLE 13. Composition

| Ingredients | Amount, Parts by Weight* | |
|---|---|---|
| | VII | VII(A) (comparison) |
| Poly(2,6-dimethyl-1,4-phenylene ether) resin (PPO®, General Electric Co., i.v. 0.45 dl/g, chloroform, 25°C.) | 35 | 35 |
| Rubber modified, high impact polystyrene (AH 1897, American Hoechst Co.) | 62.5 | 62.5 |
| Brominated polystyrene | 15.0 | 14.8 |
| Antimony oxide | 5.0 | 5.0 |

*All compositions also contained 7.5 pbw KD1101 (a mixture of S-B-S triblock and S-B diblock copolymer); 7.5 pbw A433 (an aromatic polyester); and 0.15 pbw of each of ZnO and ZnS.

The brominated polystyrenes employed had the following characteristics:

| | VII (This Invention) | VII(A) (Prior Art) |
|---|---|---|
| Bromine Content | 66.2% | 67.0% |
| Weight Average Molecular Weight, Mw (x $10^3$) | 17 | 216 |
| Total % in Br in Blend | 7.48 | 7.48 |

The various test pieces were exposed to common physical property tests in accordance with ASTM procedures and UL Subject 94 flame resistance procedures. The results are reported in Table 14.

TABLE 14. Properties

| | VII | VII(A) |
|---|---|---|
| Tensile Yield Strength (psi) | 5700 | 5860 |
| Tensile Elongation | 72% | 67% |
| Notched Izod Impact Resistance (ft.lb./in.-n.) | 5.9 | 3.5 |
| Deflection Temperature, under load at 264 psi (Test piece: ¼"x½"x5")(°F) | 195 | 195 |
| Channel Flow Length, upon injection at about 525°F. under 10,000 psi(in.) | 19.5 | 18.9 |
| UL Subject 94 Test 1/16 inch thick samples | V-O (1.8) | V-O (2.0) |

EXAMPLES VIII and VIII(A)

The compositions shown in Table 15 were prepared by forming a dry blend of the ingredients, compounding the blend by passage through a 28mm Werner Pfleiderer twin-screw extruder at about 580°F melt temperature, and cooling and chopping the extrudate into pellets. The pellets were molded into 0.125 inch-thick miniature test pieces, using a 4 ounce Newbury injection molding machine, and about 520°F melt temperature, and an about 150°F mold temperature. In addition, using the same conditions, molded test pieces having the dimensions 0.06 inch by 0.5 inch by 5 inches were prepared for the UL Subject 94 flame resistance test.

TABLE 15. Composition

| Ingredients | Amount, Parts by Weight* VIII | VIII(A) (comparison) |
|---|---|---|
| Poly(2,6-dimethyl-1,4-phenylene ether) resin (PPO®, General Electric Co., i.v. 0.40 dl./g., chloroform, 25°C.) | 45 | 45 |
| Rubber modified, high impact polystyrene (AH 1897, American Hoechst Co.) | 52.5 | 52.5 |
| Brominated polystyrene | 16.8 | 16.8 |
| Antimony oxide | 4.6 | 4.6 |

*All compositions also contained 7.5 pbw KG1651 (an S-EB-S triblock copolymer); 7.5 pbw A433 (an aromatic polyester) 3 pbw 4, 4' TDP (4, 4' Thiodiphenol); and 0.15 pbw of each of ZnO and ZnS.

The brominated polystyrene employed had the following characteristics:

| | VIII (This Invention) | VIII(A) (Prior Art) |
|---|---|---|
| Bromine Content | 56.2% | 56.1% |
| Weight Average Molecular Weight, Mw (x $10^3$) | 54 | 324 |
| Total % Br in Blend | 6.88 | 6.87 |

The various test pieces were exposed to common physical property tests in accordance with ASTM procedures and UL Subject 94 flame resistance procedures. The results are reported in Table 16.

TABLE 16. Properties

| | VIII | VIII(A) |
|---|---|---|
| Tensile Yield Strength (psi) | 6300 | 6500 |
| Tensile Elongation | 66% | 54% |
| Notched Izod Impact Resistance (ft.lb./in.-n.) | 5.5 | 3.9 |
| Deflection Temperature, under load at 264 psi (Test piece: ¼"x½"x5")(°F) | 189 | 189 |
| Channel Flow Length, upon injection at about 520°F. under 10,000 psi(in.) | 22.0 | 21.5 |
| UL Subject 94 Test 1/16-inch thick samples | V-O (2.5) | V-O (3.2) |

EXAMPLES IX and IX(A)

The compositions shown in Table 17 were prepared by forming a dry blend of the ingredients, compounding the blend by passage through a 28mm Werner Pfleiderer twin-screw extruder at about 580°F melt temperature, and cooling and chopping the extrudate into pellets. The pellets were molded into 0.125 inch-thick miniature test pieces, using a 4 ounce Newbury injection molding machine, and about 525°F melt temperature, and about 150°F mold temperature. In addition, using the same conditions, molded test pieces having the dimensions 0.06 inch by 0.5 inch by 5 inches were prepared for the UL Subject 94 flame resistance test.

For comparison purposes, a composition such as that described in Example 1 of Japanese Patent Publication was prepared and subjected to a back-to-back comparison to a similar composition prepared according to the method of the present invention employing yet another low molecular weight brominated polystyrene. Again, the composition produced by the present method shows superior Izod impact strength and channel flow length.

TABLE 17. Composition

| Ingredients | Amount, Parts by Weight* IX | IX(A) (comparison) |
|---|---|---|
| Poly(2,6-dimethyl-1,4-phenylene ether) resin (PPO®, General Electric Co., i.v. 0.40 dl/g, chloroform, 25°C.) | 45 | 45 |
| Rubber modified, high impact polystyrene (AH 1897, American Hoechst Co.) | 52.5 | 52.5 |
| Brominated polystyrene | 13.9 | 13.5 |
| Antimony oxide | 4.6 | 4.6 |

*All compositions also contained 7.5 pbw KG1651 (an S-EB-S triblock copolymer); 7.5 pbw A433 (an aromatic polyester) 3 pbw 4, 4' TDP (4, 4' Thiodiphenol); and 0.15 pbw of each of ZnO and ZnS.

The brominated polystyrenes employed had the following characteristics:

| | IX (This Invention) | IX(A) (Prior Art) |
|---|---|---|
| Bromine Content | 66.5% | 68.0% |
| Weight Average Molecular Weight, Mw ($x 10^3$) | 42 | 216 |
| Total % in Br in Blend | 6.88 | 6.86 |

The various test pieces were exposed to common physical property tests in accordance with ASTM procedures and UL Subject 94 flame resistance procedures. The results are reported in Table 18.

TABLE 18. Properties

| | IX | IX(A) |
|---|---|---|
| Tensile Yield Strength (psi) | 6400 | 6600 |
| Tensile Elongation | 54% | 49% |
| Notched Izod Impact Resistance (ft.lb./in.-n.) | 6.1 | 4.9 |
| Deflection Temperature, under load at 264 psi (Test piece: ¼"x½"x5")(°F) | 190 | 191 |
| Channel Flow Length, upon injection at about 525°F. under 10,000 psi(in.) | 20.2 | 19.9 |
| UL Subject 94 Test 1/16 inch thick samples | V-0 (2.0) | V-0 (2.5) |

As the above Examples indicate, all of compositions of the claimed invention exhibit superior notched impact strength, channel flow length and tensile elongation as compared to those compositions described by the prior art. The claimed compositions, moreover, essentially maintain other desirable properties, particularly heat deflection temperature and tensile yield strength.

The above-mentioned patents, patent application and publications are incorporated herein by reference.

Other modifications and variations of this invention are possible and are contemplated as within the scope of this invention. For example, instead of poly(2,6-dimethyl-1,4-phenylene ether) there can be substituted poly(2,6-dimethyl-co-2,3,6-trimethyl-1,4-phenylene ether). It should be understood, therefore, that changes may be made in the particular embodiments shown without departing from the principles of the invention or sacrificing its chief benefits.

## Claims

1. In a method for producing a flame retardant thermoplastic composition having improved impact strength and melt processability, that composition comprising:

(a) a polyphenylene ether resin;

(b) a rubber-modified, high impact polystyrene resin;

(c) a brominated polystyrene in an amount which improves the flame retardancy of the combination of (a) and (b); and

(d) antimony oxide in an amount which synergistically enhances the flame retardancy of the combination of (a), (b) and (c), the improvement which comprises using as (c) a low molecular weight brominated polystyrene having a weight average molecular weight lower than about 54,000.

2. The method of Claim 1, wherein component (a) is present in an amount from about 10 to about 90 parts by weight and component (b) is present in an amount from about 100 parts by weight of (a) and (b) combined.

3. The method of Claim 1, wherein component (a) is present in an amount of from about 25 to about 75 parts by weight, based on 100 parts by weight of (a) and (b) combined.

4. The method of Claim 1, wherein component (b) is present in an amount of from about 25 to about 75 parts by weight based on 100 parts by weight of (a) and (b) combined.

5. The method of Claim 2, wherein component (c) is present in an amount from about 6 to about 21 parts by weight and component (d) in an amount from about 1.6 to about 7.5 parts by weight, for each 100 parts by weight of (a) and (b) combined.

6. The method of Claim 1, wherein the polyphenylene ether is a homopolymer or copolymer containing structural units of the formula

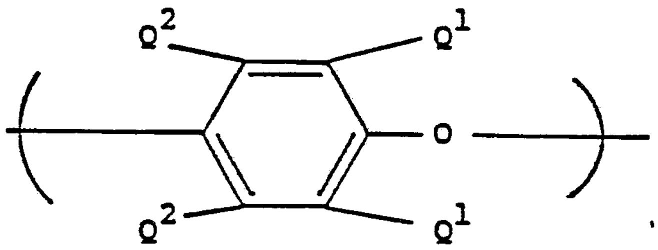

in which for each of these units independently each $Q^1$ is hydrogen, halogen, primary or secondary lower alkyl having up to seven carbon atoms, phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

7. The method of Claim 1, wherein the polyphenylene ether is poly(2,6-dimethyl-1,4-phenylene ether).

8. The method of Claim 7, wherein the poly(2,6-dimethyl-1,4-phenylene ether) has an intrinsic viscosity of about 0.35 to 0.55 deciliters per gram in choroform at 25°C.

9. The method of Claim 1, wherein the polyphenylene ether is poly(2,6-dimethyl-co-2,3,6 trimethyl-1,4-phenylene ether).

10. The method of Claim 1, wherein component (c) has a weight average molecular weight of from about 7,500 to about 18,000, as determined by gel permeation chromatography.

11. The method of Claim 1, wherein component (c) has a weight average molecular of from about 10,000 to about 17,000, as determined by gel permeation chromatography.

12. The method of Claim 1, wherein component (c) has an average bromine substitution per aromatic nucleus from 1 to 3.

13. The method of Claim 1, wherein component (c) has an average bromine substitution per aromatic nucleus of from about 1.6 to about 2.9.

14. The method of Claim 1 wherein component (c) has an average bromine substitution per aromatic nucleus of about 2.5.

15. The method of Claim 1, wherein component (c) has been prepared by reacting polystyrene with bromine chloride in a solvent, in the presence of a Lewis acid bromination catalyst.

16. The method of Claim 1, wherein component (a) is about 45 parts by weight, component (b) is about 52.5 parts by weight, component (c) is about 14 parts by weight and component (d) is about 4.5 parts by weight.

17. The method of Claim 1, wherein component (a) is about 65 parts by weight, component (b) is about 30 parts by weight, component (c) is about 6.8 parts by weight and component (d) is about 2.3 parts by weight.

18. The method of Claim 1, wherein component (a) is about 25 parts by weight, component (b) is about 70 parts by weight, component (c) is about 17.6 parts by weight and component (d) is about 5.8 parts by weight.

19. The method of Claim 1, wherein component (a) is about 50 parts by weight, component (b) is about 45 parts by weight, component (c) is about 13.7 parts by weight and component (d) is about 4.5 parts by weight.

20. The method of Claim 1, wherein component (a) is about 35 parts by weight, component (b) is about 62.5 parts by weight, component (c) is about 15 parts by weight and component (d) is about 5.0 parts by weight.

21. The method of Claim 1, wherein composition (a) is about 45 parts by weight, component (b) is about 52.5 parts by weight, component (c) is about 16.8 parts by weight and component (d) is about 4.6 parts by weight. weight and component (d) is about 4.6 parts by weight.

22. A molding composition produced by the process of Claim 1.

23. An article molded from the composition of Claim 22.